# EUROPEAN PATENT SPECIFICATION

(11) **EP 3 041 219 B1**
(45) Date of publication and mention of the grant of the patent: **15.01.2020**
(21) Application number: 14865810.7
(22) Date of filing: 17.11.2014
(51) Int. Cl.: H04N 5/225, G02B 7/28, G03B 13/36, G03B 17/18, H04N 5/232, H04N 101/00, H04N 5/262

(54) **IMAGE PROCESSING DEVICE AND METHOD, AND PROGRAM**
BILDVERARBEITUNGSVORRICHTUNG UND -VERFAHREN SOWIE PROGRAMM
PROGRAMME, PROCÉDÉ ET DISPOSITIF DE TRAITEMENT D'IMAGES

(30) Priority: 29.11.2013 JP 2013247108
(43) Date of publication of application: 06.07.2016
(73) Proprietor: Sony Corporation, Tokyo 108-0075 (JP)
(72) Inventor: KINOSHITA Masaya, Tokyo 108-0075 (JP)
(74) Representative: D Young & Co LLP
(86) International application number: PCT/JP2014/080321
(87) International publication number: WO 2015/079945

(56) References cited:
- JP-A- 2004 242 010
- JP-A- 2005 295 418
- JP-A- 2005 295 418
- JP-A- 2008 072 513
- JP-A- 2010 279 060
- JP-A- 2011 217 232
- US-A1- 2012 106 937

## Description

### Technical Field

The present technology relates to an image processing apparatus and method, and a program, and in particular, relates to an image processing apparatus and method, and a program, that can more easily confirm a focus condition of an image after photography.

### Background Art

In digital cameras of recent years and mobile phones in which a digital camera is installed, an increase in the pixels of an imaging element, that is, recording pixels, has been advancing, and simultaneously an increase in the size, and an increase in the number of pixels, of a display device installed for confirming a photographic image, has also been advancing.

Incidentally, when compared to an increase in the pixels of an imaging element (recording pixels), there are situations where the pixel number of an installed display device is generally not sufficient.

Therefore, even if a photographed image is confirmed by using a reproduction function immediately after photography, and it is decided that it is in focus, a phenomenon will often occur where it is actually out of focus and there is disappointment, when returning home, for example, and displaying it on a large-screen monitor such as a television receiving device or a personal computer, or enlarging it to a large size and printing with a printer.

In contrast to this, in digital cameras or the like in recent years, a function has appeared where a reproduction display is performed, by using a function of an electronic zoom at the time of reproduction, and enlarging (trimming) a desired position. Since a user himself or herself can select a desired position of an image immediately after photography, and can perform an enlarged display, if this is used, a particular focus condition can be confirmed while narrowing the range even in an installed display device.

However, since many of the above functions are based on an enlarged display centered on a screen center, and a user himself or herself causes a display position to move while applying some User Interface (UI) operation from the center up to a desired position, it will take a lot of time up until a focus condition is actually confirmed.

Accordingly, technology has been proposed where a shutter operation is performed, after a user checks a focus condition, by using Autofocus (AF) information in a through image prior to photography, and automatically performing an enlarged display centered on a portion attempted to be focused (focus) (for example, refer to Patent Literature 1).

Further, technology has also been proposed where the face of a photographic subject can be detected, an enlarged display centered on the position of this face can be performed, immediately prior to or immediately after photography, by focusing (focus) on the detected face, and a focus condition immediately prior to or immediately after photography can be checked (for example, refer to Patent Literature 2).

### Citation List

### Patent Literature

Patent Literature 1: JP 4380644B
Patent Literature 2: JP 4939203B

### Summary of Invention

### Technical Problem

However, in the above described technology, since an enlarged display centered on a region attempted to be focused (focus) is performed, the portion that is in focus as a result may not be enlarged to the center. In particular, in an automatic focus of a contrast system or the like, since a region attempted to be focused (focus) has a comparatively wide area, it may not be a display centered on the portion the most in focus. Therefore, it will be difficult for a user to confirm which region on an image is in focus.

In addition, in the case of manual focus photography, since a focus target is unclear in a device such as a camera, a display position movement operation by a UI operation of a user may become necessary, at the time when causing a part of a region to be displayed enlarged, and it will be troublesome. Further, in Patent Literature 2, in the case where a face is not included as a photographic subject, or in the case where wanting to focus on something other than a face, a troublesome operation may become necessary when a user is attempting to confirm a focus condition.

The present technology is performed by considering such a situation, and can more easily confirm a focus condition of an image after photography.

JP 2010-279060 (A) discloses apparatus to appropriately select and display an image in a region desired by a user to confirm a focus state when the image is displayed after photographing. When a captured image is displayed on a monitor after main exposure for storing an image on a storage medium, in addition to the captured image, an image corresponding to an AF region which is controlled so as to be focused among a plurality of AF regions is displayed on the monitor.

JP 2004-242010 (A) discloses an imaging apparatus that can confirm the focused position in an image after the focused position is automatically adjusted. A digital camera is provided with an automatic focusing function. When a focused position of a lens group is automatically adjusted with the automatic focusing function, a frame f1 denoting the area in an image where an evaluation value indicating a degree of focusing is highest is displayed. When a user performs a prescribed operation in this state, an area corresponding to the frame f1 is displayed with magnification, a sub block most closely focused in this area is specified and a frame f2 denoting the sub block is displayed.

JP 2011-217232 (A) discloses an apparatus to perform enlarged display of a predetermined region in a captured image on a display screen of a display device, and to perform display control in such a way that a focal point in the enlarged-displayed region is positioned in the center of the display screen. An imaging apparatus generates a first image corresponding to the number of pixels of a display screen of a display device on the basis of a captured image, and generates an enlarged image corresponding to an enlargement target region as a second image. The imaging apparatus displays the first image and the enlarged image on the display device while switching them. The imaging apparatus displays the second image on the display device when the enlargement target region is designated in the state where the first image is displayed on the display device. The imaging apparatus divides a region of the displayed second image into a plurality of regions, changes the enlargement target region so as to dispose a region having a highest focusing level among the divided regions in the center of the display screen of the display device, then generates an enlarged image corresponding to the changed enlargement region as a new enlarged image, and displays the new enlarged image on the display device.

JP 2005-295418 (A) discloses an image pickup device and image pickup and display method for displaying a more focused point of a photographed image for a user. An object and a range finding frame are superimposed and displayed on an LCD when photographing the object. Position information on the focused range finding frame is preserved on a RAM, for example, after a color change or the like of the focused frame. When photographing the focused frame of a photographed image, an image having a proximate focused region is preferentially magnified and displayed on the LCD, so that a more focused region can be displayed for a user. Further, mutually proximate focused frames can also be simultaneously magnified and displayed on the LCD, so that even if there are a plurality of focused frames, the number of steps of an image to be magnified and displayed for the user can be reduced.

### Solution to Problem

The invention is defined by the appended claims.

An image processing apparatus is provided as defined in the appended independent claim 1.

An image processing method is provided as defined in the appended independent claim 6, and a program causing a computer to execute said image processing method is provided as defined in the appended claim 7

Advantageous embodiments are defined in the appended dependent claims.

### Advantageous Effects of Invention

According to an aspect of the present technology, a focus condition of an image after photography can be more easily confirmed.

Note that, the effect described here is not necessarily limited, and may be any of the effects described within the present description.

### Brief Description of Drawings

[FIG. 1] FIG. 1 is a figure that shows a configuration example of the external appearance of an imaging apparatus.
[FIG. 2] FIG. 2 is a figure that shows a configuration example of the functions of the imaging apparatus.
[FIG. 3] FIG. 3 is a figure that describes a photographing process.
[FIG. 4] FIG. 4 is a figure that describes an enlargement reproduction process.
[FIG. 5] FIG. 5 is a flow chart that describes a photographing process.
[FIG. 6] FIG. 6 is a flow chart that describes an enlargement reproduction process.
[FIG. 7] FIG. 7 is a figure that describes a photographing process.
[FIG. 8] FIG. 8 is a figure that describes an enlargement reproduction process.
[FIG. 9] FIG. 9 is a flow chart that describes a photographing process.
[FIG. 10] FIG. 10 is a flow chart that describes an enlargement reproduction process.
[FIG. 11] FIG. 11 is a flow chart that describes an enlargement reproduction process.
[FIG. 12] FIG. 12 is a figure that describes an enlargement reproduction process.
[FIG. 13] FIG. 13 is a flow chart that describes an enlargement reproduction process.
[FIG. 14] FIG. 14 is a figure that shows a configuration example of the external appearance of a multifunctional mobile phone device.
[FIG. 15] FIG. 15 is a figure that shows a configuration example of the functions of the multifunctional mobile phone device.
[FIG. 16] FIG. 16 is a flow chart that describes a photographing process.
[FIG. 17] FIG. 17 is a flow chart that describes an enlargement reproduction process.
[FIG. 18] FIG. 18 is a figure that shows a configuration example of the external appearance of a wearable camera.
[FIG. 19] FIG. 19 is a figure that shows a configuration example of the functions of the wearable camera.
[FIG. 20] FIG. 20 is a flow chart that describes a photographing process.
[FIG. 21] FIG. 21 is a flow chart that describes an enlarged display image generation process.
[FIG. 22] FIG. 22 is a flow chart that describes a reproduction process.
[FIG. 23] FIG. 23 is a figure that shows a configuration example of a computer.

### Description of Embodiments

Hereinafter, embodiments to which the present technology is applied will be described by referring to the figures.

### <First embodiment

### <Configuration example of the external appearance of the imaging apparatus>

First, an outline of the present technology will be described.

In the present technology, a user, who is a photographer, can easily and intuitively confirm a focus condition of an obtained image, even in a small display screen, after photography of a photographic subject, regardless of whether it is automatic focus photography or manual photography.

If a user can easily and intuitively confirm a focus condition of an image, the loss of a photographing opportunity, due to a confirmation operation of a focus condition up until now being troublesome, or not noticing a focus deviation, can be reduced. Further, according to the present technology, a user can also confirm whether or not there is a deviation between a portion attempted to be focused by the user, and a portion focused as a result of photography.

It is possible for the present technology to be applied in general to devices capable of photographing an image, such as a digital still camera, a digital video camera, a multifunctional mobile phone device having a camera function, and a wearable camera. Hereinafter, first an example will be described where the present technology is applied to a digital still camera.

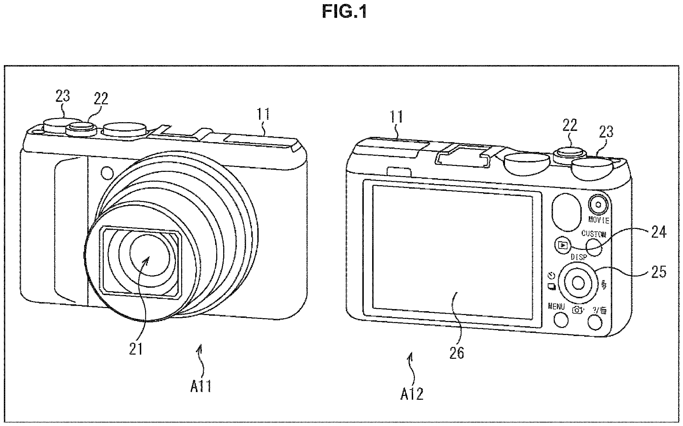

FIG. 1 is a figure that shows a configuration example of the external appearance of an imaging apparatus to which the present technology is applied.

An imaging apparatus 11 is constituted from a digital still camera, and the figure shown by the arrow A11 in FIG. 1 is a figure where the imaging apparatus 11 is viewed from a front surface side, and the figure shown by the arrow A12 is a figure where the imaging apparatus 11 is viewed from a rear surface side.

An optical system 21 that guides light incident from a photographic subject to an imager, which is not illustrated, is included on the front surface of the imaging apparatus 11, and a user performs photography by turning the optical system 21 towards a desired photographic subject.

Further, a shutter button 22 and a dial 23 are included on the top surface of the imaging apparatus 11, and a reproduction button 24 and a dial 25 are included on the rear surface of the imaging apparatus 11. A user performs work such as photography or reproduction while operating these shutter button 22 through to dial 25.

In addition, a display unit 26 constituted from a liquid crystal panel or the like is also included on the rear surface of the imaging apparatus 11, and a user can confirm a photographed image, a focus condition of this image or the like, by viewing an image or the like displayed in the display unit 26.

### <Configuration example of the functions of the imaging apparatus>

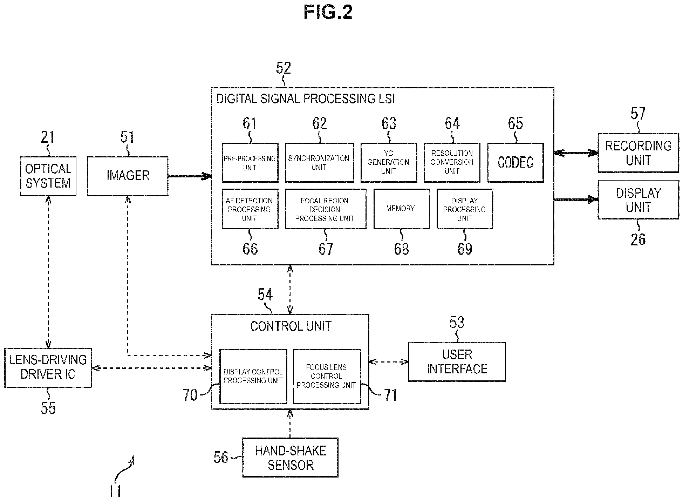

Further, a configuration of the functions of the imaging apparatus 11 shown in FIG. 1 is set, for example, to the configuration shown in FIG. 2. Note that, in FIG. 2, the same reference numerals are attached to portions corresponding to the case in FIG. 1, and a description of these will be arbitrarily omitted.

The imaging apparatus 11 of FIG. 2 has an optical system 21, an imager 51, a digital signal processing Large Scale Integration (LSI) 52, a user interface 53, a control unit 54, a lens-driving driver Integrated Circuit (IC) 55, a hand-shake sensor 56, a recording unit 57, and a display unit 26.

The optical system 21 is constituted from a plurality of lenses, such as a zoom lens and a focus lens, a diaphragm mechanism or the like, and collects light incident from a photographic subject on a light receiving surface of the imager 51.

The imager 51 is constituted, for example, from an imaging element such as a Charge Coupled Devices (CCD), or a Complementary Metal Oxide Semiconductor (CMOS). The imager 51 performs photoelectric conversion by receiving light incident from the optical system 21, and supplies a photographic image obtained as a result of this, and more specifically, image data of a photographic image, to the digital signal processing LSI 52.

The digital signal processing LSI 52 applies various types of signal processes to the photographic image supplied from the imager 51. The digital signal processing LSI 52 includes a pre-processing unit 61, a synchronization unit 62, a YC generation unit 63, a resolution conversion unit 64, a CODEC 65, an AF detection processing unit 66, a focal region decision processing unit 67, a memory 68, and a display processing unit 69.

The pre-processing unit 61 applies a clamping process, a defect pixel correction process or the like to the photographic image. The synchronization unit 62 performs a demosaic process for the photographic image so that each pixel of the photographic image to which a defect pixel correction process or the like has been applied has each of the color components of R, G, and B.

The YC generation unit 63 generates a luminance signal and a color signal, from the photographic image to which a demosaic process has been applied. The resolution conversion unit 64 performs a resolution process for the photographic image. The CODEC 65 performs an encoding process for the photographic image to which a resolution conversion has been performed, or decrypts the decoded photographic image.

The AF detection processing unit 66 calculates an evaluation value showing the state of an automatic focus, by using the photographic image or the like as necessary, at the time when performing an automatic focus operation. The focal region decision processing unit 67 performs a focal region decision process based on the photographic image to which a demosaic process has been performed, and calculates a focal score showing a focal degree in each region of the photographic image.

The memory 68 temporarily records the photographic image to which an arbitrary process has been performed by a part or the entire pre-processing unit 61 through to the resolution conversion unit 64 (hereinafter, also called a photographic image to which a development process has been performed) or the like. The display processing unit 69 converts the photographic image into a format capable of being displayed in the display unit 26, for example, and supplies it to the display unit 26.

The user interface 53 is constituted from the shutter button 22 through to the dial 25 shown in FIG. 1, for example, a touch panel superimposed on the display unit 26 or the like, and supplies a signal corresponding to a user's operation to the control unit 54.

The control unit 54 controls the operation of the entire imaging apparatus 11. For example, the control unit 54 controls photography of a photographic image by the imager 51. Further, the control unit 54 performs an optical hand-shake correction by controlling the lens-driving driver IC 55 and causing the lens of the optical system 21 to move, based on an output of the hand-shake sensor 56, or causes the diaphragm mechanism of the optical system 21 to move by controlling the lens-driving driver IC 55.

In addition, the control unit 54 includes a display control processing unit 70 and a focus lens control processing unit 71. The display control processing unit 70 instructs an execution of a process related to a display of the photographic image to each of the units of the digital signal processing LSI 52. The focus lens control processing unit 71 controls the lens-driving driver IC 55 based on the evaluation value supplied from the AF detection processing unit 66, and causes a focus operation to be executed.

The lens-driving driver IC 55 executes a focus operation by causing a focus lens or the like constituting the optical system 21 to move in accordance with a control of the control unit 54, and performs driving of the diaphragm mechanism or an optical hand-shake correction. The hand-shake sensor 56 is constituted from a gyro sensor, for example, and detects a movement of the imaging apparatus 11 and supplies it to the control unit 54.

The recording unit 57 is constituted from a removable medium capable of being detached from the imaging apparatus 11, for example, and records data such as the photographic image supplied from the digital signal processing LSI 52, and supplies the recorded data to the digital signal processing LSI 52.

### <Outline of the processes of the imaging apparatus>

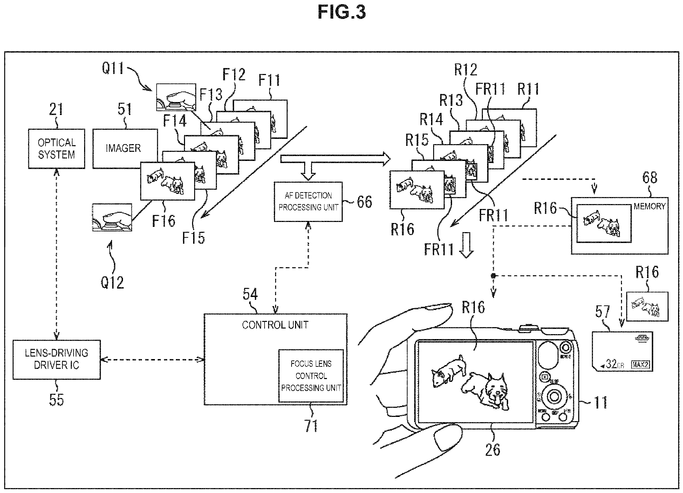

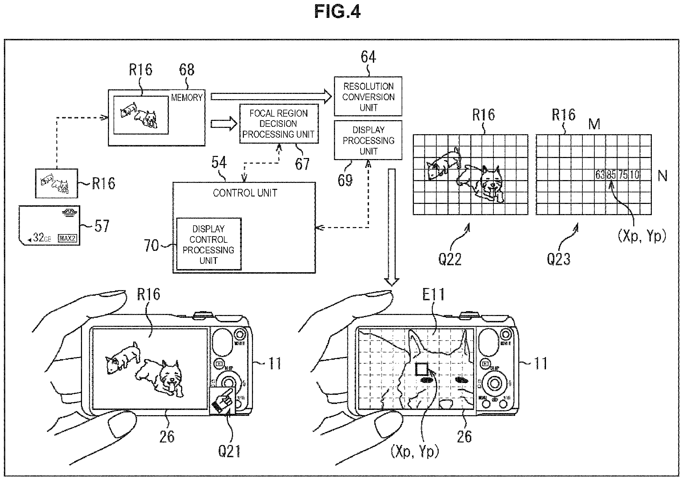

To continue, an outline of the processes of the imaging apparatus 11 will be described by referring to FIG. 3 and FIG. 4. Note that, in this example, automatic focus photography is performed.

For example, as shown in FIG. 3, when a photographing operation is started, the imager 51 performs photoelectric conversion by receiving light incident via the optical system 21. In this way, a photographic image F11 through to a photographic image F16 of each time, that is, of each frame, are obtained.

Here, from among the photographic image F11 through to the photographic image F16, within the figure, they become photographic images photographed at a time approximately after the one on the front side, that is, at a time nearer the present time. Therefore, in this example, the initially photographed one is the photographic image F11, and the finally photographed one becomes the photographic image F16.

At the time of photography of such a photographic image of each frame, the AF detection processing unit 66 calculates an evaluation value showing the state of an automatic focus based on the photographic image of each frame, and supplies it to the control unit 54. The focus lens control processing unit 71 of the control unit 54 controls the lens-driving driver IC 55 based on the evaluation value supplied from the AF detection processing unit 66, and causes a focus operation to be executed.

In this way, a focus lens or the like of the optical system 21 is driven by the lens-driving driver IC 55, and is set to a state where focused on a photographic subject.

Further, when the photographic image F11 through to the photographic image F16 of each frame are obtained, a development process is sequentially performed for these photographic images, and a photographic image R11 through to a photographic image R16 obtained as a result of this are displayed in order in the display unit 26 as through images at the time of photography.

A user confirms a photographic subject while viewing the through images displayed in the display unit 26, and performs photography, by operating the shutter button 22 or the like.

In this example, a user half-presses the shutter button 22 at the time of the taking of the photographic image F13 (at the time of photography), such as shown by the arrow Q11. Accordingly, a frame FR11 of a target of an automatic focus is displayed on the photographic image R13, which is a through image corresponding to the photographic image F13, and the photographic image R14 and the photographic image R15 of the frames after this.

This frame FR11 is an image of a frame showing the region where the focus lens control processing unit 71 is attempting to focus, and the size of the frame FR11 also changes in each frame, in accordance with the size of a photographic subject on the photographic image.

When it is decided that it becomes a state focused on a photographic subject within the frame FR11, a user instructs photography of an image, by fully pressing the shutter button 22, that is, by pressing the shutter button 22 deeper than the state of half-pressing.

In this example, since the shutter button 22 is fully pressed at the time of the taking of the photographic image F16, such as shown by the arrow Q12, the photographic image R16 obtained by performing a development process for the photographic image F16 is captured as an image obtained by photography.

In this way, the photographed photographic image R16 is retained in the memory 68 such as shown on the bottom right, within the figure, and afterwards is recorded to the recording unit 57, and displayed in the display unit 26 as a preview image after photography. Here, a preview image is an image displayed for a user to confirm a photographed image, immediately after photography.

A user performs an operation to the user interface 53, such as shown by the arrow Q21 on the bottom left portion of FIG. 4, for example, in a state where the photographic image R16 such as described above has been displayed as a preview image, and instructs an enlarged display.

Then, in the imaging apparatus 11, an enlargement reproduction process is performed that performs an enlarged display centered on a portion in focus of the photographed photographic image R16.

Note that, other than being performed at the time when instructed by a user, the enlargement reproduction process may be automatically started, by a menu setting or the like. In such a case, for example, the enlargement reproduction process may be automatically started, after a preview image is displayed, and then a prescribed time elapses.

When the enlargement reproduction process is started, first the photographic image R16 that becomes a processing target is read from the recording unit 57 as necessary, and is supplied to the memory 68. Note that, in the case where the enlargement reproduction process is performed immediately after photography, the photographic image R16 is already retained in the memory 68, and so loading of the photographic image R16 may be unnecessary.

When it is set to a state where the photographic image R16 has been retained in the memory 68, the display control processing unit 70 of the control unit 54 instructs an execution of a focal region decision process to the focal region decision processing unit 67.

Then, the focal region decision processing unit 67 performs a focal region decision process for the photographic image R16, by reading the photographic image R16 from the memory 68.

In the focal region decision process, the photographic image R16 such as shown by the arrow Q22, for example, is divided into M in the horizontal direction and divided into N in the vertical direction, within the figure. That is, the entire photographic image R16 is divided into MxN regions. Then, a focal score showing a focal degree is calculated, for each of the MxN regions, and the focal score of each region is supplied to the display control processing unit 70 as a result of the focal region decision process.

The display control processing unit 70 selects the region with the highest focal score, that is, one region with the focal degree the most in focus, such as shown by the arrow Q23, as a display center position that becomes a center of an enlarged display, based on the focal score of each region. Note that, one square represents one divided region, and the number value within this square represents the focal score.

In this example, a region specified by coordinates (Xp, Yp) is selected as a display center position. The region of such an obtained display center positioned is a region the most in focus in the photographic image R16.

The display control processing unit 70 instructs a display of an enlarged display image of the photographic image R16 centered on the obtained display center position, to the display processing unit 69.

Then, the display processing unit 69 generates an enlarged display image E11 centered on the position of coordinates (Xp, Yp), from the photographic image R16 enlarged by the resolution conversion by the resolution conversion unit 64, and supplies it to the display unit 26 and causes it to be displayed. In this way, the enlarged display image E11 is displayed in the display unit 26 such as shown on the bottom right, within the figure. Note that, in the enlarged display image E11, each of the regions represented by dotted lines represents each of the regions for which a focal score has been calculated at the time of the focal region decision process, and are not actually displayed in the enlarged display image E11.

The enlarged display image E11 is an image where a region of a predetermined size is enlarged on the photographic image R16 centered on the position of coordinates (Xp, Yp). That is, it is an image of the region surroundings the most in focus in the photographic image R16. Therefore, by viewing the enlarged display image E11, a user can easily and intuitively confirm a focus condition of the portion the most in focus, that is, whether it is sufficiently in focus.

### <Description of the photographing process>

Next, a specific operation of the imaging apparatus 11 described above will be described.

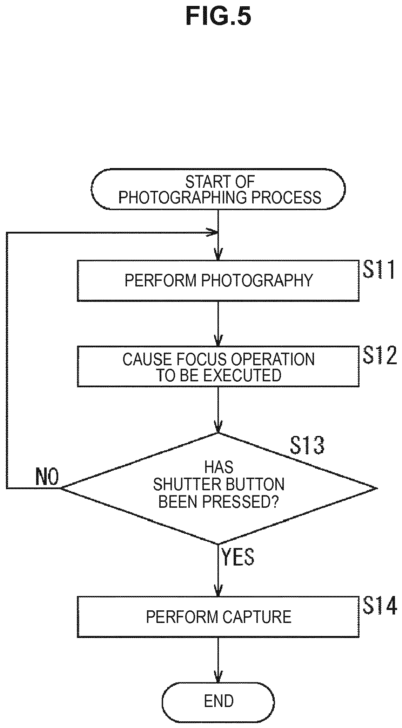

First, a photographing process by the imaging apparatus 11 will be described by referring to the flow chart of FIG. 5.

In step S11, the imager 51 photographs a photographic image.

Specifically, the imager 51 performs photoelectric conversion by receiving light incident from a photographic subject via the optical system 21, and supplies a photographic image obtained as a result of this to the digital signal processing LSI 52. Each of the units constituting the digital signal processing LSI 52 such as the pre-processing unit 61 and the synchronization unit 62 performs a development of a photographic image by applying various types of processes to the photographic image supplied from the imager 51.

Further, the photographic image to which a development process has been performed is supplied to the display unit 26 by the display processing unit 69, and is displayed. That is, the photographic image to which a development process has been performed is displayed as a through image. In addition, the AF detection processing unit 66 calculates an evaluation value of the state of an automatic focus, based on the photographic image as necessary, and information for a focus operation acquired by the imager 51 or the like, and supplies it to the focus lens control processing unit 71.

In step S12, the focus lens control processing unit 71 controls the lens-driving driver IC 55 based on the evaluation value supplied from the AF detection processing unit 66, and causes a focus operation to be executed.

In step S13, the control unit 54 decides whether or not the shutter button 22 has been pressed, based on a signal supplied from the shutter button 22 as the user interface 53. For example, when photographing is instructed by fully pressing the shutter button 22, it is decided that the shutter button 22 has been pressed.

In step S13, in the case where it is decided that the shutter button 22 has not been pressed, the process returns to step S11, and the above described processes are repeated.

In contrast to this, in step S13, in the case where it is decided that the shutter button 22 has been pressed, in step S14, the digital signal processing LSI 52 captures the photographic image to which a development process has been performed in accordance with a control of the control unit 54.

That is, the digital signal processing LSI 52 supplies the photographic image to which a development process has been performed to the memory 68 as a photographed photographic image, and causes it to be retained.

In this way, when the photographic image is photographed, the photographing process ends.

In this way, when the photographic image is obtained, the obtained photographic image is supplied to the display unit 26 by the display processing unit 69, and is displayed as a preview image. Further, the photographic image is arbitrarily encoded by the CODEC 65, with an appropriate timing, and is recorded to the recording unit 57.

### <Description of the enlargement reproduction process>

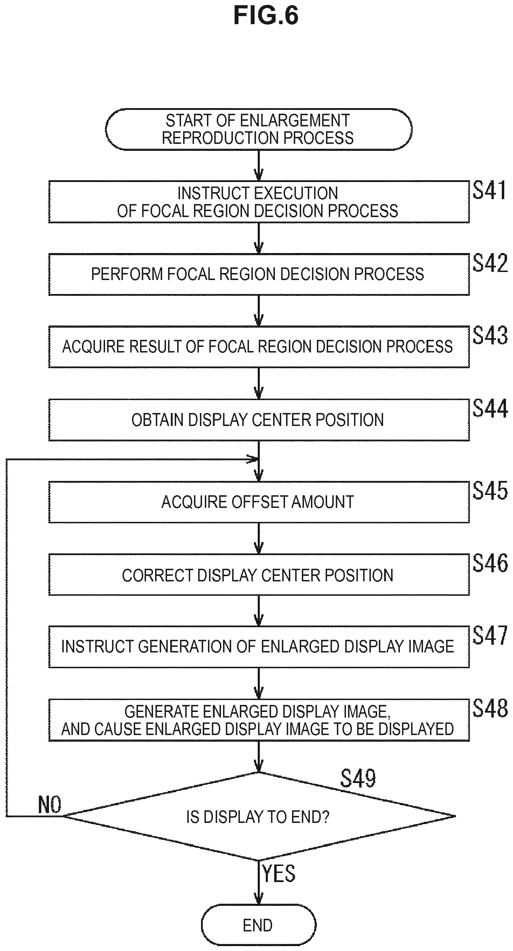

Further, an enlargement reproduction process is started, in the case where a user instructs a display of an enlarged display image by operating the user interface 53, in a state where a preview image is displayed or the like, or in the case where a preview image has been displayed for a prescribed time, in a state where it becomes a setting where the enlargement reproduction process is automatically started. Hereinafter, the enlargement reproduction process by the imaging apparatus 11 will be described by referring to the flow chart of FIG. 6.

In step S41, the display control processing unit 70 instructs an execution of a focal region decision process to the focal region decision processing unit 67.

In step S42, the focal region decision processing unit 67 performs a focal region decision process, by reading a photographic image from the memory 68 in accordance with the instruction of the display control processing unit 70.

For example, the focal region decision processing unit 67 divides the photographic image into MxN regions, and generates a luminance signal for each pixel within a region, for each of the divided regions. The luminance signals may be generated, for example, by the YC generation unit 63.

Further, the focal region decision processing unit 67 extracts high-region components by applying a filter process using a high-pass filter or the like to the luminance signal for each of the pixels within a divided region, and makes the obtained high-region components absolute values. In addition, the focal region decision processing unit 67 performs a high-region component noise removal and a limiter process for the absolute value of the high-region component obtained for each of the pixels within a divided region, and afterwards calculates a focal score for a divided region, by integrating the absolute value of the high-region component of each of the pixels within a region. That is, a sum total of the absolute value of the high-region component of each of the pixels within a divided region is set to a focal score of this region.

In a photographic image, since an edge component is prominently represented by a region that is focus, that is, a region with a high focal degree, the focal score, which is an integrated value of the high-region components, becomes a larger value as the region is more in focus.

The focal region decision processing unit 67 supplies such an obtained focal score of each region of the photographic image to the display control processing unit 70 as a result of the focal region decision process.

Note that, the focal region decision process is not limited to the above described process, and may be any process, if the focal degree of each region of the photographic image is obtained.

For example, the focal score of each region of the photographic image may be obtained, by using an identification device (dictionary) obtained by machine learning using a learning image that is in focus, and a learning image that is not in focus and where shaking and blurring occurs. In such a case, the focal region decision processing unit 67 extracts a characteristic amount from each region of the photographic image, performs a calculation by assigning the characteristic amount of each region to the identification device, and setting a value obtained as a result of this to the focal score of each region.

In step S43, the display control processing unit 70 acquires the focal score of each region of the photographic image as a result of the focal region decision process, from the focal region decision processing unit 67.

In step S44, the display control processing unit 70 obtains a display center position, based on the acquired focal score of each region.

For example, the display control processing unit 70 sets a region with the largest (highest) focal score, from among each of the MxN regions on the photographic image, to a display center position. That is, coordinates (Xp, Yp), which show the position of the region with the largest focal score, are set to a display center position. The process that obtains a display center position can be a process that detects the region the most in focus from the photographic image.

In step S45, the display control processing unit 70 acquires an offset amount from the user interface 53.

Further, in the case where an enlarged display image is displayed in the display unit 26, a user can cause the center position of the enlarged display image to move up-down and left-right, by operating the user interface 53. When a user inputs a movement amount (Xofst, Yofst) of the center position of the enlarged display image, by operating the user interface 53, the display control processing unit 70 acquires the movement amount (Xofst, Yofst) input by the user, from the user interface 53, as an offset amount.

In step S46, the display control processing unit 70 corrects the display center position based on the acquired offset amount.

Specifically, the display control processing unit 70 corrects the display center position, by causing the display center position to move only by the offset amount. Therefore, the display center position prior to correction (Xp, Yp) is moved only by the offset amount (Xofst, Yofst), and the display center position after correction is set to (Xc, Yc) = (Xp+Xofst, Yp+Yofst).

In step S47, the display control processing unit 70 instructs a generation of an enlarged display image to the display processing unit 69, by specifying the display center position (Xc, Yc), and a prescribed display magnification.

In step S48, the display processing unit 69 generates an enlarged display image in accordance with the instruction of the display control processing unit 70, and causes the display unit 26 to display it.

For example, the display processing unit 69 instructs a resolution conversion corresponding to the display magnification specified by the display control processing unit 70 to the resolution conversion unit 64, for a photographic image retained in the memory 68. Then, the display processing unit 69 cuts out a region of a size determined by a screen size of the display unit 26, centered on the display center position (Xc, Yc), from the photographic image obtained by the resolution conversion, and sets it to an enlarged display image. The display processing unit 69 supplies such an obtained enlarged display image to the display unit 26, and causes it to be displayed.

In step S49, the display control processing unit 70 decides whether or not to end the display of the enlarged display image. For example, in the case where an end of the display has been instructed by a user, it is decided to end the display of the enlarged display image, such as in the case where the enlarged display image is displayed, and then a prescribed time determined beforehand elapses.

In step S49, in the case where it is decided not to end the display of the enlarged display image, the process returns to step S45, and the above described processes are repeated.

In contrast to this, in the case where it is decided to end the display of the enlarged display image in step S49, the display control processing unit 70 instructs a display end to the display processing unit 69, and the display of the enlarged display image is ended. When the display of the enlarged display image ends, the enlargement reproduction process ends.

As described above, the imaging apparatus 11 detects a region the most in focus, by performing a focal region decision process for a photographic image obtained by photography, and the position of the region obtained as a result of detection is set to a display center position. Then, the imaging apparatus 11 causes a prescribed region of the photographic image centered on the display center position to be displayed as an enlarged display image.

In this way, by detecting a region the most in focus, and generating an enlarged display image by setting the detected region to a display center, a user can more easily and intuitively confirm a focus condition of a photographic image.

For example, since a portion the most in focus is displayed in the screen center, by the imaging apparatus 11, a user can know whether or not a portion wanted to be in focus is displayed in the screen center, and whether it is focused on a portion intuitively aimed at. Further, since a portion the most in focus is displayed in the screen center, a user can immediately confirm whether a focus condition of a desired region is sufficient.

In particular, in the imaging apparatus 11, since a focus condition can be confirmed prior to photography or after photography, it can be known whether a photographic image obtained as a result of photography is sufficient. That is, while a focus condition is confirmed by taking sufficient time prior to photography, and thereafter photography is performed, it is not often that there is an occurrence of not being in focus in an actually obtained photographic image.

For example, in the case where a user senses that a focus condition or the like is not sufficient, a loss of a photographing opportunity can be prevented, at the time when again performing photography of an image straight away.

Further, in the imaging apparatus 11, an enlarged display image is generated by performing a focal region decision process for a photographic image obtained by photography. Accordingly, the focal region vicinity is displayed enlarged, regardless of whether it is photography by an automatic focus, or whether it is photography by a manual focus. Therefore, a focus condition of a photographic image can be more easily and intuitively confirmed, regardless of the photographing method, the method for focusing or the like.

### <Second embodiment

### <Outline of the processes of the imaging apparatus>

Note that, heretofore, while an example has been described where a display center position is detected, by using all of the focal scores of each divided region of a photographic image, a display center position can be more effectively obtained, at the time when photographing a photographic image by an automatic focus, if using information obtained at the time of photography.

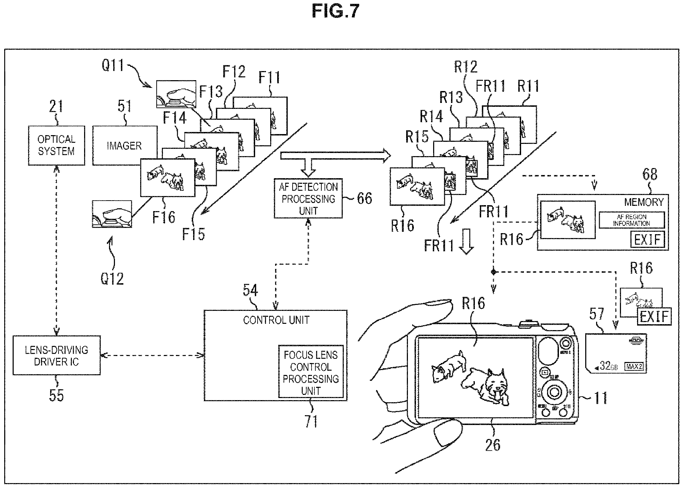

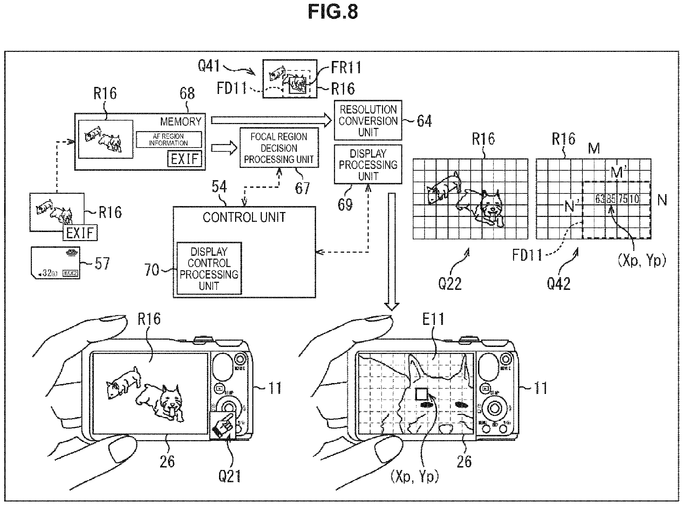

In such a case, for example, a photographing process and an enlargement reproduction process are performed, such as shown in FIG. 7 and FIG. 8. Note that, in FIG. 7 and FIG. 8, the same reference numerals are attached to portions corresponding to the case in FIG. 3 and FIG. 4, and a description of these will be arbitrarily omitted.

For example, as shown in FIG. 7, a photographic image F11 through to a photographic image F16 are photographed when a photographing operation is started, and a photographic image R11 through to a photographic image R16 are obtained by performing a development process for these photographic images.

Then, when the shutter button 22 is fully pressed at the time of the taking of the photographic image F16, such as shown by the arrow Q12, the photographic image R16 obtained by performing a development process for the photographic image F16 is captured as an image obtained by photography.

At this time, in the imaging apparatus 11, while the photographic image R16 is retained in the memory 68, information showing a region set to a focal (focus) target in an automatic focus at the time of photography of the photographic image F16, that is, a region of an AF target, is also retained in the memory 68 as AF region information, along with the photographic image R16.

For example, at the time when a focus operation is performed by a compact system, information t showing a region of an AF target, that is, a region of a frame FR11 of a target of an automatic focus, determined by the focus lens control processing unit 71, is set to AF region information.

Further, for example, in the case where a focus operation is performed by a phase-lag sensor system, information showing an AF point selected as a position in focus, at the time of photography of the photographic image F16, from among a plurality of AF points determined beforehand, is set to AF region information.

In addition, in the example of FIG. 7, Exchangeable Image File Format (EXIF) data, in which AF region information has been stored, is also retained in the memory 68, in addition to AF region information. This EXIF data is data attached as metadata of the photographic image R16, and AF region information is recorded, for example, to a free region of the EXIF data.

When the photographic image R16, the AF region information, and the EXIF data such as described above are retained in the memory 68, afterwards, EXIF data is added to the photographic image R16, with an appropriate timing, and the photographic image R16 to which EXIF data has been added is recorded to the recording unit 57. Further, the photographic image R16 is displayed in the display unit 26 as a preview image after photography.

When a user performs an operation to the user interface 53, and instructs an enlarged display, such as shown by the arrow Q21 on the bottom left portion of FIG. 8, for example, in a state where the photographic image R16 has been displayed as a preview image, an enlargement reproduction process is performed in the imaging apparatus 11. Note that, the enlargement reproduction process may be automatically started by a menu setting or the like.

When the enlargement reproduction process is started, first the photographic image R16 that becomes a processing target is read from the recording unit 57 as necessary, and is supplied to the memory 68. Note that, in the case where the enlargement reproduction process is performed immediately after photography, the photographic image R16 is already retained in the memory 68, and so loading of the photographic image R16 may be unnecessary. In this case, the AF region information and the EXIF data are also retained in the memory 68.

Next, the display control processing unit 70 instructs an execution of a focal region decision process to the focal region decision processing unit 67, and the focal region decision processing unit 67 performs a focal region decision process by reading the photographic image R16 from the memory 68.

In the focal region decision process, the photographic image R16 such as shown by the arrow Q22, for example, is divided into MxN regions, and a focal score is calculated for each region.

To continue, the display control processing unit 70 determines a decision target region FD11, which becomes a target that obtains a display center position, in the photographic image R16, based on the AF region information or the EXIF data retained in the memory 68, such as shown by the arrow Q41.

In this example, a region that includes the entire region of a frame FR11 of a target of an automatic focus, shown by the AF region information, is set to the decision target region FD11. This decision target region FD11 may be any size or shape, if it is a region that includes the region shown by the AF region information.

Further, the display control processing unit 70 selects a region with the highest (largest) focal score, from among each of the regions within the determined decision target region FD 11, such as shown by the arrow Q42, as a display center position.

In this example, a region specified by coordinates (Xp, Yp), from among M'xN' divided regions within the decision target region FD11, is selected as a display center position.

Since the region set to the decision target region FD11 is a region set to a target in focus at the time of photography of a photographic image, it is expected that the region of the display center position detected from the decision target region FD11 becomes the region the most in focus in the photographic image R16.

The display control processing unit 70 instructs a display of an enlarged display image of the photographic image R16 centered on the display center position, to the display processing unit 69.

Then, the display processing unit 69 generates an enlarged display image E11 centered on the position of coordinates (Xp, Yp), from the photographic image R16 enlarged by the resolution conversion by the resolution conversion unit 64, and causes the display unit 26 to display the enlarged display image E11 such as shown on the bottom right, within the figure.

Since the enlarged display image E11 is an image of the region surroundings the most in focus in the photographic image R16, a user can easily and intuitively confirm whether or not it is sufficiently in focus in a desired portion, by viewing the enlarged display image E11.

For example, while it becomes a state where the focus is locked, when a user half-presses the shutter button 22 at the time of photography, a photographic subject will often move, up until the shutter button 22 is fully pressed and a photographic image is captured, after a focus has been locked. Then, in a photographic image actually photographed, a user will often not focus on a portion to be aimed at.

Further, in an automatic focus of a phase-lag sensor system, for example, since an AF point is only a position determined beforehand, there will often be no AF point at a portion wanted to be in focus. In addition, in an automatic focus of a compact system, the area of a region that becomes a focus target will often be large, and it will not be known whether it is actually in focus at the time of photography.

Even in such a case, in the imaging apparatus 11, since a user can easily confirm a focus condition, by viewing the enlarged display image E11, photography can be immediately performed again, at the time when the focus condition is insufficient. Therefore, a user can concentrate on photographing work by placing importance on real time.

### <Description of the photographing process>

Next, a specific operation of the imaging apparatus 11 will be described, in the case where the processes described with reference to FIG. 7 and FIG. 8 are performed.

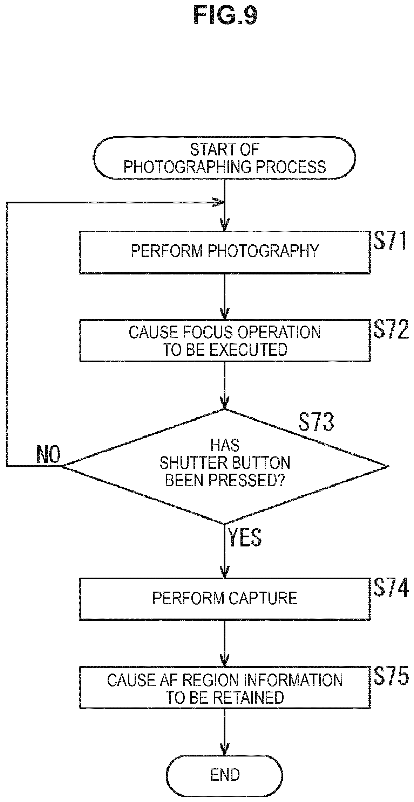

First, the photographing process by the imaging apparatus 11 will be described by referring to the flow chart of FIG. 9. Note that, since the processes of step S71 through to step S74 are the same as the processes of step S11 through to step S14 of FIG. 5, a description of them will be omitted.

In step S75, the focus lens control processing unit 71 generates AF region information based on information used for a focus operation at the time of photography, supplies the AF region information to the digital signal processing LSI 52, and causes it to be retained.

The digital signal processing LSI 52 supplies the AF region information supplied from the focus lens control processing unit 71 to the memory 68, and causes it to be retained in association with a photographic image. Note that, EXIF data may be retained in the memory 68, by storing the AF region information in this EXIF data as necessary, or EXIF data in which AF region information has been stored may be added to a photographic image.

In this way, when the AF region information is retained, the photographing process ends.

### <Description of the enlargement reproduction process>

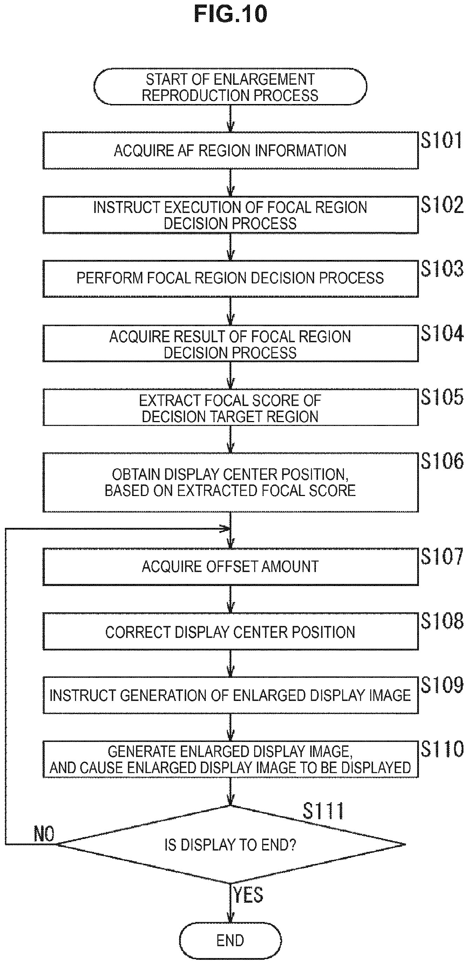

Further, the enlargement reproduction process is started, in the case where a user instructs a display of an enlarged display image by operating the user interface 53, in a state where a preview image is displayed or the like, or in the case where a preview image has been displayed for a prescribed time, in a state where it becomes a setting where the enlargement reproduction process is automatically started. Hereinafter, the enlargement reproduction process by the imaging apparatus 11 will be described by referring to the flow chart of FIG. 10.

In step S101, the display control processing unit 70 acquires AF region information from the memory 68. Note that, the AF region information may be read from EXIF data added to a photographic image retained in the memory 68.

When the AF region information is acquired, afterwards, while the processes of step S102 through to step S104 are performed, these processes are similar to the processes of step S41 through to step S43 of FIG. 6, and so a description of them will be omitted.

In these processes, a focal region decision process is performed, and a focal score of each of MxN regions of a photographic image obtained as a result of this process is acquired by the display control processing unit 70.

In step S105, the display control processing unit 70 extracts a focal score of each of M'xN' regions constituting a decision target region determined by the AF region information, from among the focal scores of each of the acquired MxN regions.

In step S106, the display control processing unit 70 obtains a display center position, based on the focal score of each of the extracted M'xN' regions. For example, the region with the largest focal score, from among each of the M'xN' regions on the photographic image, is set to a display center position.

When the display center position is obtained, afterwards, while the processes of step S107 through to step Sill are performed and the enlargement reproduction process ends, these processes are similar to the processes of step S45 through to step S49 of FIG. 6, and so a description of them will be omitted.

As described above, the imaging apparatus 11 detects a region the most in focus, from within the decision target region determined by the AF region information, by performing a focal region decision process for a photographic image obtained by photographing, and sets the position of the region obtained as a result of detection to a display center position. Then, the imaging apparatus 11 causes the region of the photographic image centered on the display center position to be displayed as an enlarged display image.

In this way, by displaying an enlarged display image by setting a region the most in focus to a display center, a user can more easily and intuitively confirm a focus condition of a photographic image. In particular, by setting a retrieval range of a display center position to within a decision target region, an enlarged display image can be more promptly obtained.

### <Modified example 1 of the second embodiment

### <Description of the enlargement reproduction process>

Note that, in the second embodiment, while a case has been described where a focal region decision process is performed by setting an entire photographic image to a target, a focal region decision process may be performed by setting only a decision target region to a target.

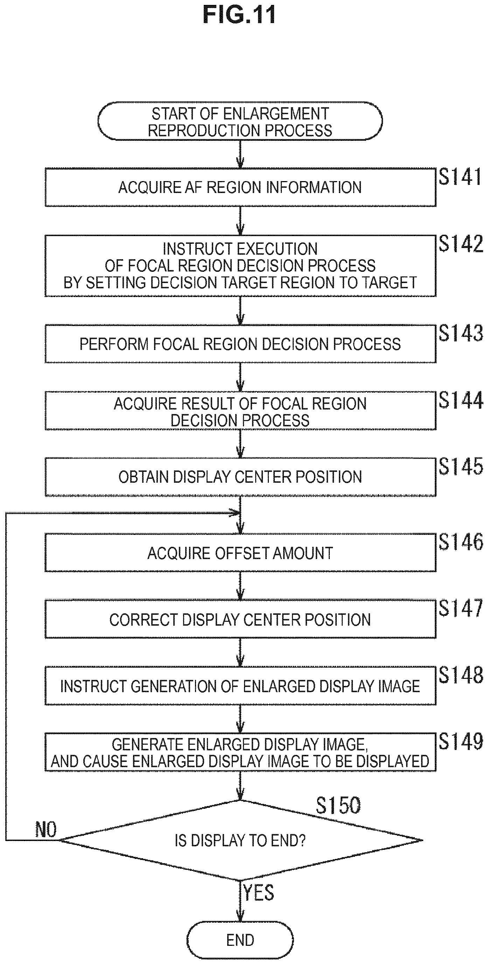

In such a case, the photographing process described with reference to FIG. 9 is performed, and afterwards the enlargement reproduction process shown in FIG. 11 is performed. Hereinafter, the enlargement reproduction process by the imaging apparatus 11 will be described by referring to the flow chart of FIG. 11.

Note that, since the process of step S141 is similar to the process of step S101 of FIG. 10, a description of this will be omitted.

In step S142, the display control processing unit 70 supplies information showing a decision target region determined by AF region information to the focal region decision processing unit 67, and instructs an execution of a focal region decision process, which sets only the decision target region to a target, to the focal region decision processing unit 67.

In step S143, the focal region decision processing unit 67 performs a focal region decision process, by reading the portion of the decision target region from within the photographic image from the memory 68, in accordance with the instruction of the display control processing unit 70. In this way, a focal score of each of M'xN' regions constituting the decision target region is obtained.

In step S144, the display control processing unit 70 acquires the focal score of each of M'xN' regions constituting the decision target region as a result of the focal region decision process, from the focal region decision processing unit 67.

In step S145, the display control processing unit 70 obtains a display center position, based on the focal score of each of the M'xN' regions. For example, the region with the largest focal score, from among each of the M'xN' regions on the photographic image, is set to a display center position.

When the display center position is obtained, afterwards, while the processes of step S146 through to step S150 are performed, and the enlargement reproduction process ends, these processes are similar to the processes of step S45 through to step S49 of FIG. 6, and so a description of them will be omitted.

As described above, the imaging apparatus 11 detects a region the most in focus from within the decision target region, by performing a focal region decision process by setting the decision target region on the photographic image to a target, and sets the position of the region obtained as a result of detection to a display center position. Then, the imaging apparatus 11 causes the region of the photographic image centered on the display center position to be displayed as an enlarged display image.

In this way, by displaying an enlarged display image by setting a region the most in focus to a display center, a user can more easily and intuitively confirm a focus condition of a photographic image, after photography. In particular, by performing a focal region decision process by setting only a decision target region to a target, the processing time of the focal region decision process can be additionally shortened, more than that of the example described with reference to FIG. 10. Further, since a band (region) of a photographic image read from the memory 68 is also reduced, not only can the processes be promptly performed, but also the power consumption can be reduced.

### <Third embodiment>

### <Outline of the imaging apparatus>

In addition, heretofore, while a case has been described where there is one display center position, a plurality of display center positions may be selected.

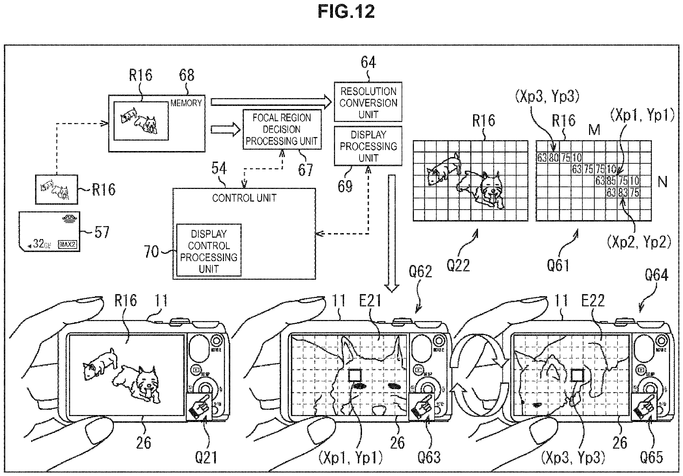

In such a case, the photographing process described with reference to FIG. 3 is performed, and afterwards the enlargement reproduction process shown in FIG. 12, for example, is performed. Note that, in FIG. 12, the same reference numerals are attached to portions corresponding to the case in FIG. 4, and a description of these will be arbitrarily omitted.

When the enlargement reproduction process is started, the photographic image R16 is read from the recording unit 57 as necessary, and is supplied to the memory 68.

Then, when the display control processing unit 70 instructs an execution of a focal region decision process to the focal region decision processing unit 67, the focal region decision processing unit 67 performs a focal region decision process by reading the photographic image R16 from the memory 68.

In the focal region decision process, the photographic image R16 such as shown by the arrow Q22, for example, is divided into MxN regions and focal scores are calculated.

The display control processing unit 70 selects regions, where the focal score is a prescribed value or more such as shown by the arrow Q61, as display center positions, based on the focal score of each region. Note that, one square represents one divided region, and the number value within this square represents the focal score.

In this example, the region specified by coordinates (Xp1, Yp1), the region specified by coordinates (Xp2, Yp2), and the region specified by coordinates (Xp3, Yp3) are selected as display center positions. Such obtained regions of the three display center positions are regions sufficiently in focus, in the photographic image R16.

The display control processing unit 70 instructs a display of enlarged display images of the photographic image R16 centered on the obtained display center positions, to the display processing unit 69.

Then, the display processing unit 69 generates enlarged display images centered on the regions for which a display center position has been set, and causes them to be displayed, in the order of the highest focal score. At this time, a display center position at a position near to another display center position is removed from a processing target, and the generation of an enlarged display image is not performed.

In this example, the focal score of each of the regions of coordinates (Xp1, Yp1) through to coordinates (Xp3, Yp3) respectively becomes 85, 83, and 80. Further, here, the distance between the region of coordinates (Xp1, Yp1) and the region of coordinates (Xp2, Yp2) is set to be near, and the region of coordinates (Xp2, Yp2) with the lower focal score, from among these regions, is set to be removed from a processing target.

In such a case, first the display processing unit 69 generates an enlarged display image E21 centered on the position of coordinates (Xp1, Yp1) with the highest focal score, from the photographic image R16 enlarged by the resolution conversion by the resolution conversion unit 64, supplies it to the display unit 26 and causes it to be displayed. In this way, the enlarged display image E21 is displayed in the display unit 26, such as shown by the arrow Q62.

Further, a user operates the user interface 53 such as shown by the arrow Q63, in a state where the enlarged display image E21 is displayed, and instructs a display of the next enlarged display image.

Then, the display processing unit 69 generates an enlarged display image E22 centered on the position of coordinates (Xp3, Yp3) with the second highest focal score, from the photographic image R16 enlarged by the resolution conversion by the resolution conversion unit 64, supplies it to the display unit 26 and causes it to be displayed. In this way, the enlarged display image E22 is displayed in the display unit 26, such as shown by the arrow Q64.

In addition, a user operates the user interface 53 such as shown by the arrow Q65, in a state where the enlarged display image E22 is displayed, and instructs a display of the next enlarged display image. In this example, since there is no next display center position that becomes a processing target, it returns to a state where the enlarged display image E21 is displayed such as shown by the arrow Q62. That is, it returns to a display of the initially displayed enlarged display image.

Note that, in the enlarged display image E21 and the enlarged display image E22, each of the regions represented by dotted lines represents each of the regions for which a focal score has been calculated at the time of a focal region decision process, and are not actually displayed in the enlarged display image E21 and the enlarged display image E22.

In this way, by generating enlarged display images for a plurality of display center positions, and causing them to be displayed in the order of the highest focal score, a user can more easily and promptly confirm a focus condition of each portion in focus to some extent, in the photographic image R16.

Note that, the switching of the display of enlarged display images is not limited to at the time when there has been an instruction by a user, and it may be automatically switched at the time when an enlarged display image is displayed and then a prescribed time elapses.

### <Description of the enlargement reproduction process>

Next, a specific operation of the imaging apparatus 11 will be described, in the case where the processes described with reference to FIG. 12 are performed.

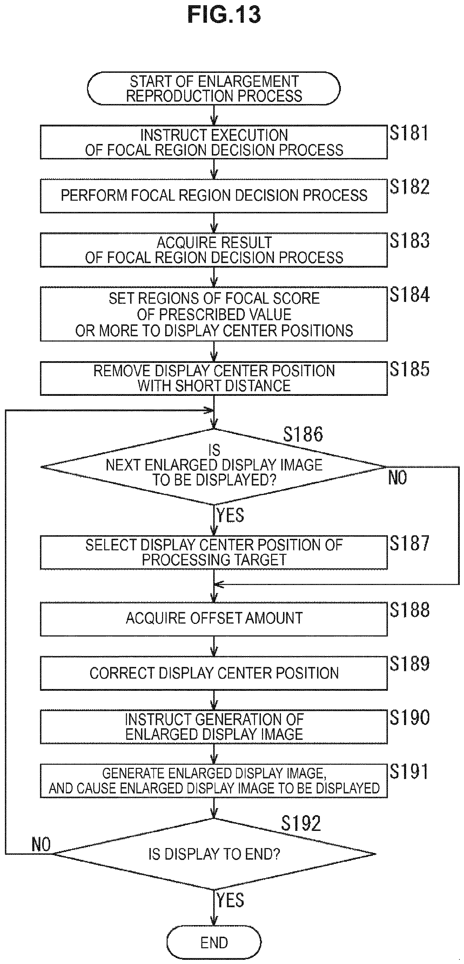

Hereinafter, the enlargement reproduction process by the imaging apparatus 11 will be described by referring to the flow chart of FIG. 13. Note that, this enlargement reproduction process is started, in the case where a display of an enlarged display image has been instructed by a user, in a state where a preview image is displayed or the like, or in the case where a preview image has been displayed for a prescribed time, in a state where it becomes a setting where the enlargement reproduction process is automatically started.

When the enlargement reproduction process is started, while the processes of step S181 through to step S183 are performed, these processes are similar to the processes of step S41 through to step S43 of FIG. 6, and so a description of them will be omitted. By these processes, a focal score of each of MxN regions of a photographic image is obtained.

In step S184, the display control processing unit 70 sorts (and switches) the acquired MxN regions in the order or the highest focal score, and sets regions of a focal score of a prescribed value or more to display center positions.

In step S185, the display control processing unit 70 removes a display center position with a mutually short distance, from among the display center positions. For example, in the case where a prescribed display center position is at a position within a prescribed distance from another display center position on the photographic image, the one with the lowest focal score from among the prescribed display center position and the other display center position is removed (excluded).

The display control processing unit 70 retains a list of such display center positions aligned in a focal score order as a candidate list.

In step S186, the display control processing unit 70 decides whether or not to display the next enlarged display image.

For example, it is decided to display the next enlarged display image, in the case where a display of the next enlarged display image has been instructed by a user, or in the case where an enlarged display image is displayed and then a prescribed time elapses.

In step S186, in the case where it is decided not yet to display the next enlarged display image, the process of step S187 is skipped, and afterwards, the process proceeds to step S188.

In contrast to this, in step S186, in the case where it is decided to display the next enlarged display image, in step S187, the display control processing unit 70 selects a display center position of a processing target. For example, the display center position with the highest rank, that is, with the highest focal score, from among the display center positions that are not yet a processing target, in the candidate list, is selected as the next display center position of a processing target. In this way, enlarged display images are displayed one by one, in the order from the highest focal score.

In the case where the process of step S187 is performed and a display center position set to a processing target has been selected, or it is decided not to display the next enlarged display image in step S186, the process proceeds to step S188.

Then, while the processes of step S188 through to step S191 are performed, these processes are similar to the processes of step S45 through to step S48 of FIG. 6, and so a description of them will be omitted. By these processes, an enlarged display image is displayed for a display center position that is set to a processing target.

In step S192, the display control processing unit 70 decides whether or not to end the display of the enlarged display image. For example, in the case where an end of the display has been instructed by a user, it is decided to end the display of the enlarged display image, such as in the case where the enlarged display image to be finally displayed is displayed, and then a prescribed time determined beforehand elapses.

In step S192, in the case where it is decided not to end the display of the enlarged display image, the process returns to step S186, and the above described processes are repeated.

In contrast to this, in the case where it is decided to end the display of the enlarged display image in step S192, the display control processing unit 70 instructs a display end to the display processing unit 69, and the display of the enlarged display image is ended. When the display of the enlarged display image ends, the enlargement reproduction process ends.

As described above, the imaging apparatus 11 detects one or a plurality of regions in focus, by performing a focal region decision process, and sets the positions of the regions obtained as a result of detection to display center positions. Then, the imaging apparatus 11 causes the regions of the photographic image centered on each display center position to be respectively displayed as enlarged display images.

In this way, by displaying one or a plurality of enlarged display images, by setting one or a plurality of regions in focus to display centers, a user can more easily and intuitively confirm a focus condition of a photographic image, after photography.

### <Fourth example>

### <Configuration example of the external appearance of the multifunctional mobile phone device>

In addition, heretofore, while a case has been described where the present technology is applied to the imaging apparatus 11 such as a digital still camera, it is also possible for the present technology such as described above to be applied to a multifunctional mobile phone device or the like. Hereinafter, the case where the present technology is applied to a multifunctional mobile phone device will be described as an example.

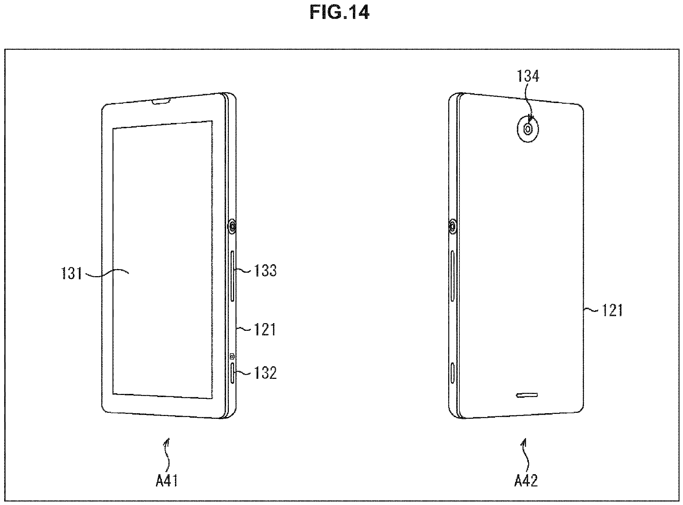

FIG. 14 is a figure that shows a configuration example of the external appearance of a multifunctional mobile phone device to which the present technology is applied.

A multifunctional mobile phone device 121 is constituted from a mobile-type phone device having a camera function, and the figure shown by the arrow A41 in FIG. 14 is a figure that shows the multifunctional mobile phone device 121 from a front surface side, and the figure shown by the arrow A42 is a figure that shows the multifunctional mobile phone device 121 from a rear surface side.

A display unit 131 constituted from a liquid crystal panel or the like is included on the front surface of the multifunctional mobile phone device 121, and a touch panel, which is not illustrated, is included superimposed on the display unit 131. For example, a user views an image or the like displayed in the display unit 131, and operates an icon or the like displayed in the display unit 131.

Further, various types of buttons, such as a shutter button 132 functioning as a shutter button at the time of photography by a camera function, or a button 133 for a volume adjustment or the like, are included on the side surface of the multifunctional mobile phone device 121.

In addition, an optical system 134 that guides light incident from a photographic subject to an imager, which is not illustrated, is included on the rear surface of the multifunctional mobile phone device 121, and a user performs photography by turning the optical system 134 towards a desired photographic subject.

### <Configuration example of the functions of the multifunctional mobile phone device>

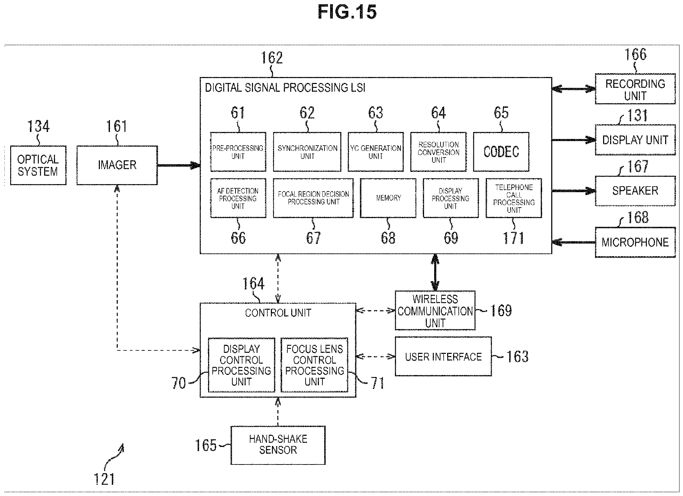

Further, a configuration of the functions of the multifunctional mobile phone device 121 shown in FIG. 14 is set, for example, to the configuration shown in FIG. 15. Note that, in FIG. 15, the same reference numerals are attached to portions corresponding to the case in FIG. 14 or FIG. 2, and a description of these will be arbitrarily omitted.

The multifunctional mobile phone device 121 has an optical system 134, an imager 161, a digital signal processing LSI 162, a user interface 163, a control unit 164, a hand-shake sensor 165, a recording unit 166, a display unit 131, a speaker 167, a microphone 168, and a wireless communication unit 169.

Note that, since the optical system 134, the imager 161, the digital signal processing LSI 162, the user interface 163, the control unit 164, the hand-shake sensor 165, the recording unit 166, and the display unit 131 are similar to the optical system 21, the imager 51, the digital signal processing LSI 52, the user interface 53, the control unit 54, the hand-shake sensor 56, the recording unit 57, and the display unit 26 of the imaging apparatus 11, a description of them will be arbitrarily omitted.

In this example, a display control processing unit 70 and a focus lens control processing unit 71 are included in the control unit 164. Further, the user interface 163 is constituted, for example, from a touch panel, a shutter button 132, a button 133 or the like superimposed on the display unit 131.

The digital signal processing LSI 162 applies an electronic hand-shake correction to a photographic image, based on an output of the hand-shake sensor 165. In addition, the digital signal processing LSI 162 includes a pre-processing unit 61, a synchronization unit 62, a YC generation unit 63, a resolution conversion unit 64, a CODEC 65, an AF detection processing unit 66, a focal region decision processing unit 67, a memory 68, a display processing unit 69, and a telephone call processing unit 171.

The telephone call processing unit 171 performs a process related to a telephone call with another telephone device by a user. For example, the telephone call processing unit 171 supplies a voice signal, obtained by having the microphone 168 collect a user's voice, to the wireless communication unit 169, and causes it to be transmitted to a telephone device of a telephone partner via a base station or the like. Further, for example, the telephone call processing unit 171 supplies a voice signal received by the wireless communication unit 169, transmitted from a telephone device of a telephone partner, to the speaker 167, and causes it to be reproduced.

The wireless communication unit 169 performs wireless communication in accordance with a control of the control unit 164. For example, the wireless communication unit 169 performs transmission and reception of a voice signal with a telephone partner via a base station or the like, or wirelessly performs transmission and reception of information at a comparatively short distance such as Wi-Fi (registered trademark).

### <Description of the photographing process and the enlargement reproduction process>

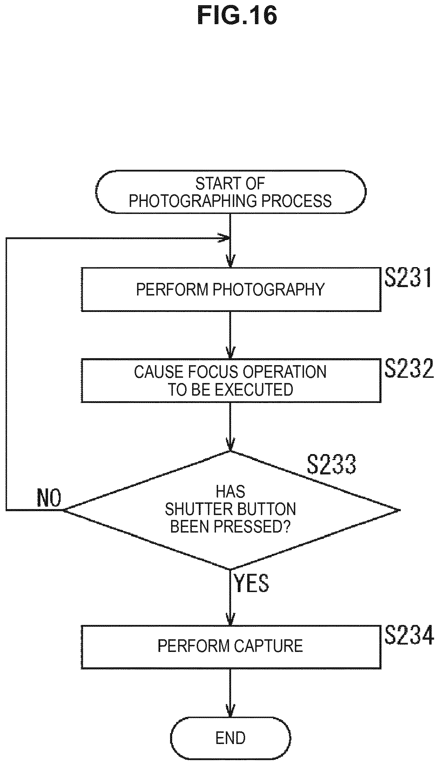

Next, a specific operation of the multifunctional mobile phone device 121 described above will be described. First, a photographing process by the multifunctional mobile phone device 121 will be described by referring to the flow chart of FIG. 16. Note that, in the photographing process, while the processes of step S231 through to step S234 are performed, these processes are similar to the processes of step S11 through to step S14 of FIG. 5, and so a description of them will be omitted.

Further, the multifunctional mobile phone device 121 performs an enlargement reproduction process, after performing the photographing process, in the case where a user instructs a display of an enlarged display image by operating the user interface 163, in a state where a preview image is displayed or the like, or in the case where a preview image has been displayed for a prescribed time, in a state where it becomes a setting where the enlargement reproduction process is automatically started.

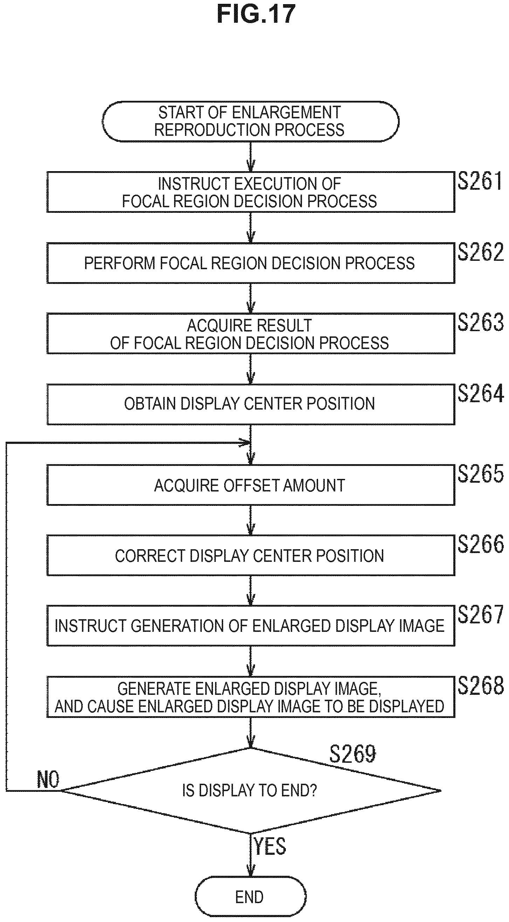

Hereinafter, the enlargement reproduction process by the multifunctional mobile phone device 121 will be described by referring to the flow chart of FIG. 17. In the enlargement reproduction process of FIG. 17, while the processes of step S261 through to step S269 are performed, these processes are similar to the processes of step S41 through to step S49 of FIG. 6, and so a description of them will be omitted.

Further, in the multifunctional mobile phone device 121, processes similar to the photographing process shown in FIG. 9, and a process similar to the enlargement reproduction process shown in FIG. 10, FIG. 11, or FIG. 13, may be performed.

### <Fifth example>

### <Configuration example of the external appearance of the wearable camera>

In addition, it is also possible for the present technology to be applied to a digital video camera or the like capable of being worn on a user's head or the like with a small size, which is called a wearable camera. Hereinafter, the case where the present technology is applied to a wearable camera will be described as an example.

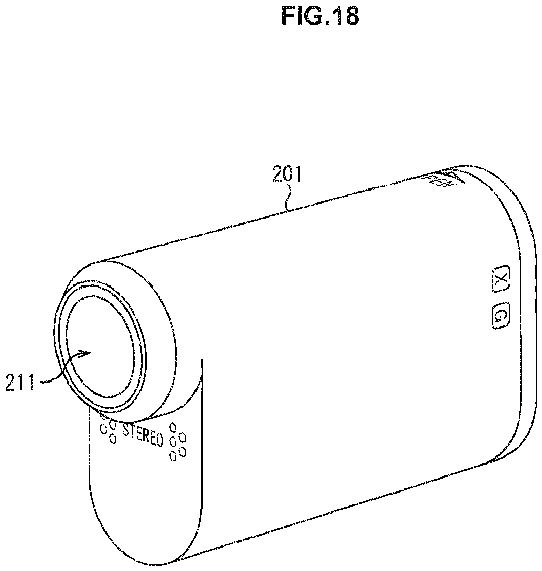

FIG. 18 is a figure that shows a configuration example of the external appearance of a wearable camera to which the present technology is applied.

An optical system 211 that guides light incident from a photographic subject to an imager, which is not illustrated, is included on the front of a wearable camera 201, and a user performs photography by turning the optical system 211 towards a desired photographic subject.

Further, various types of buttons such as a recording button, which is not illustrated, are included on the back surface of the wearable camera 201, and a user instructs photography or reproduction, by operating these buttons. In addition, the wearable camera 201 can perform a transfer of information with another device, for example, the multifunctional mobile phone device 121 shown in FIG. 15, by wireless communication.

### Configuration example of the functions of the wearable camera>

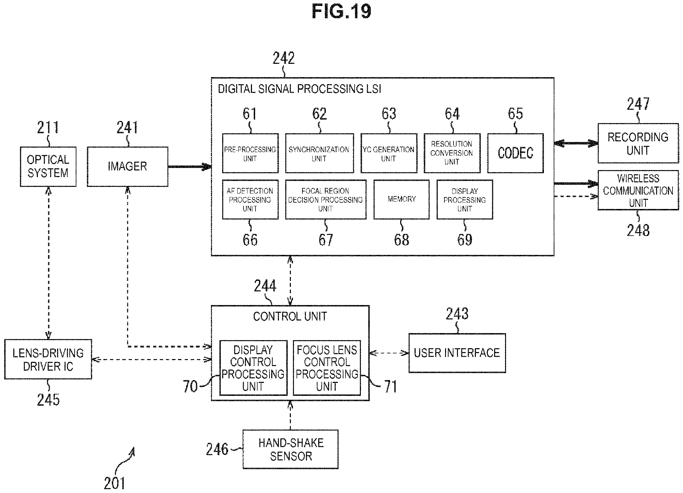

Further, a configuration of the functions of the wearable camera 201 shown in FIG. 18 is set, for example, to the configuration shown in FIG. 19. Note that, in FIG. 19, the same reference numerals are attached to portions corresponding to the case in FIG. 18 or FIG. 2, and a description of these will be arbitrarily omitted.

The wearable camera 201 has an optical system 211, an imager 241, a digital signal processing LSI 242, a user interface 243, a control unit 244, a lens-driving driver IC 245, a hand-shake sensor 246, a recording unit 247, and a wireless communication unit 248.

Note that, since the optical system 211 and the imager 241 through to the recording unit 247 are similar to the optical system 21 and the imager 51 through to the recording unit 57 of FIG. 2, a description of them will be arbitrarily omitted.

In this example, a display control processing unit 70 and a focus lens control processing unit 71 are included in the control unit 244. Further, the digital signal processing LSI 242 includes a pre-processing unit 61, a synchronization unit 62, a YC generation unit 63, a resolution conversion unit 64, a CODEC 65, an AF detection processing unit 66, a focal region decision processing unit 67, a memory 68, and a display processing unit 69.

The wireless communication unit 248 performs wireless communication in accordance with a control of the digital signal processing LSI 242. For example, the wireless communication unit 248 wirelessly performs transmission and reception of information at a comparatively short distance such as Wi-Fi (registered trademark).

### <Description of the photographing process>

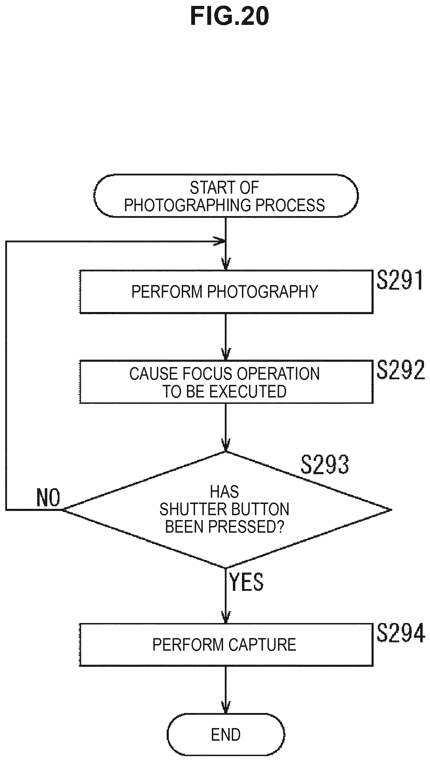

Next, a specific operation of the wearable camera 201 described above will be described. First, a photographing process by the wearable camera 201 will be described by referring to the flow chart of FIG. 20.

In the photographing process of FIG. 20, while the processes of step S291 through to step S294 are performed, these processes are similar to the processes of step S11 through to step S14 of FIG. 5, and so a description of them will be omitted.

When a photographic image is captured, by performing the process of step S294, the digital signal processing LSI 242 supplies the photographic image to the wireless communication unit 248 and transmission is performed, for example, to the multifunctional mobile phone device 121, or supplies the photographic image to the recording unit 247 and causes it to be recorded. As described above, when the photographic image is captured, the photographing process ends.

Further, in such a case, the wireless communication unit 169 of the multifunctional mobile phone device 121 receives the photographic image wirelessly transmitted from the wireless communication unit 248 and supplies it to the digital signal processing LSI 162. The display processing unit 69 supplies the photographic image received by the wireless communication unit 169 to the display unit 131 and causes it to be displayed.

### <Description of the enlarged display image generation process>

When a photographic image is captured by performing a photographing process, afterwards, the wearable camera 201 performs an enlarged display image generation process that generates an enlarged display image, for example, and transmits it to the multifunctional mobile phone device 121. For example, the enlarged display image generation process is started, at the time when a user instructs a display of an enlarged display image by operating the wearable camera 201 or the multifunctional mobile phone device 121, or at the time when an enlarged display image has been displayed for a prescribed time, in the case where automatically started by a setting or the like.

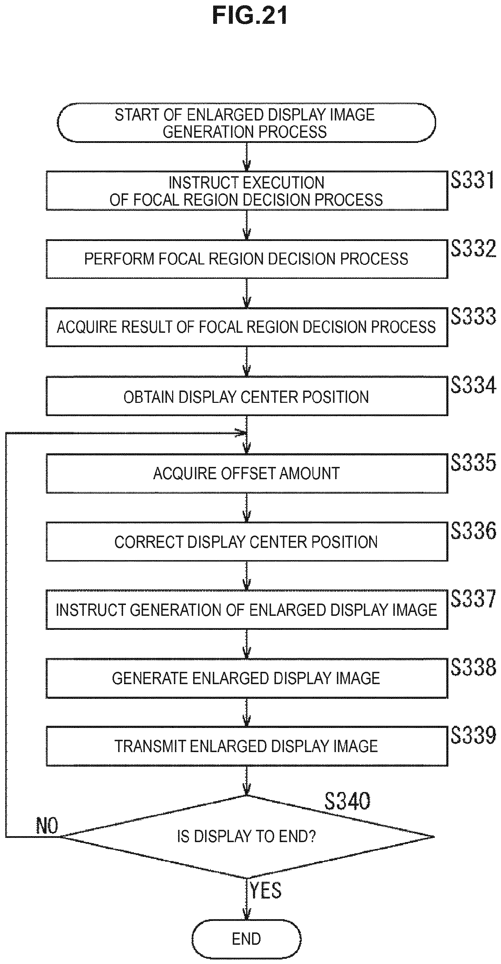

Hereinafter, the enlarged display image generation process by the wearable camera 201 will be described by referring to the flow chart of FIG. 21.

Note that, since the processes of step S331 through to step S337 are similar to the processes of step S41 through to step S47 of FIG. 6, a description of them will be omitted. Here, the acquisition of an offset amount in step S335 may be acquired, for example, from the multifunctional mobile phone device 121.

In step S338, the display processing unit 69 generates an enlarged display image in accordance with an instruction of the display control processing unit 70, and supplies it to the wireless communication unit 248.

For example, the display processing unit 69 instructs a resolution conversion corresponding to a display magnification specified by the display control processing unit 70 to the resolution conversion unit 64, for a photographic image retained in the memory 68. Then, the display processing unit 69 cuts out a region of a predetermined size centered on a display center position, from the photographic image obtained by the resolution conversion, and sets it to an enlarged display image. The display processing unit 69 supplies such an obtained enlarged display image to the wireless communication unit 248.

In step S339, the wireless communication unit 248 wirelessly transmits the enlarged display image supplied from the display processing unit 69 to the multifunctional mobile phone device 121.

In step S340, the display control processing unit 70 decides whether or not to end the display of the enlarged display image. For example, in the case where an end has been instructed by a user, it is decided to end the display of the enlarged display image, such as the case where the enlarged display image is displayed in the multifunctional mobile phone device 121, and then a prescribed time determined beforehand elapses.

In step S340, in the case where it is decided not to end the display of the enlarged display image, the process returns to step S335, and the above described processes are repeated.

In contrast to this, in the case where it is decided to end the display of the enlarged display image in step S340, the display control processing unit 70 instructs a display end to the display processing unit 69, and a display end of the enlarged display image is instructed to the multifunctional mobile phone device 121, via the wireless communication unit 248 by the display processing unit 69. When the display of the enlarged display image ends, the enlarged display image generation process ends.

As described above, the wearable camera 201 detects a region the most in focus, by performing a focal region decision process for a photographic image obtained by photography, and sets the position of the region obtained as a result of detection to a display center position. Then, the wearable camera 201 transmits the region of the photographic image centered on the display center position to the multifunctional mobile phone device 121 as an enlarged display image, and causes it to be displayed.

In this way, by detecting a region the most in focus, and generating an enlarged display image by setting the detected region to a display center, a user can more easily and intuitively confirm a focus condition of a photographic image, after photography.

Note that, the wearable camera 201 may transmit a display center position and a display magnification to the multifunctional mobile phone device 121, and an enlarged display image may be generated in the multifunctional mobile phone device 121.

### <Description of the reproduction process>

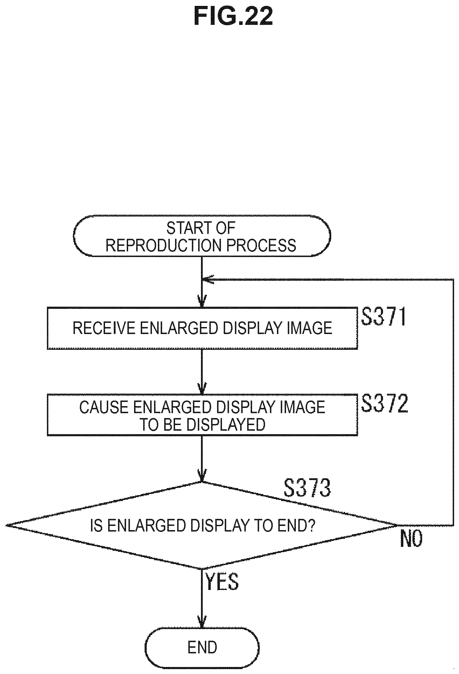

Further, when an enlarged display image is transmitted from the wearable camera 201, the multifunctional mobile phone device 121 starts a reproduction process that receives and displays the enlarged display image. Hereinafter, the reproduction process by the multifunctional mobile phone device 121 will be described by referring to the flow chart of FIG. 22.

In step S371, the wireless communication unit 169 receives the enlarged display image transmitted by wireless communication from the wearable camera 201, and supplies it to the digital signal processing LSI 162.

In step S372, the display processing unit 69 supplies the enlarged display image supplied from the wireless communication unit 169 to the display unit 131, and causes it to display the enlarged display image. When the enlarged display image is displayed in the display unit 131, a user can confirm a focus condition of a photographic image, in the multifunctional mobile phone device 121, which is a device different from the wearable camera 201 photographing the photographic image.

In step S373, the control unit 164 decides whether or not to end the enlarged display. For example, in the case where an instruction to end the enlarged display, transmitted from the wearable camera 201, has been received, by the wireless communication unit 169, it is decided to end the enlarged display. Further, in the case where a user instructs an end of the enlarged display by operating the user interface 163, for example, it may be decided to end the enlarged display.

In step S373, in the case where it is decided not to end the enlarged display, the process returns to step S371, and the above described processes are repeated. Further, at this time, a user may input an offset amount by operating the user interface 163, and this offset amount may be transmitted to the wearable camera 201.

In contrast to this, in step S373, in the case where it is decided to end the enlarged display, the control unit 164 instructs a display end of the enlarged display image to the display processing unit 69, and the reproduction process ends.

As described above, the multifunctional mobile phone device 121 receives an enlarged display image from the wearable camera 201, and causes it to be displayed. In this way, a user can more easily and intuitively confirm a focus condition of a photographic image, by a larger screen.

Note that, in the wearable camera 201, a process similar to the photographing process shown in FIG. 9, and a process similar to the enlargement reproduction process shown in FIG. 10, FIG. 11, or FIG. 13, may be performed.

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

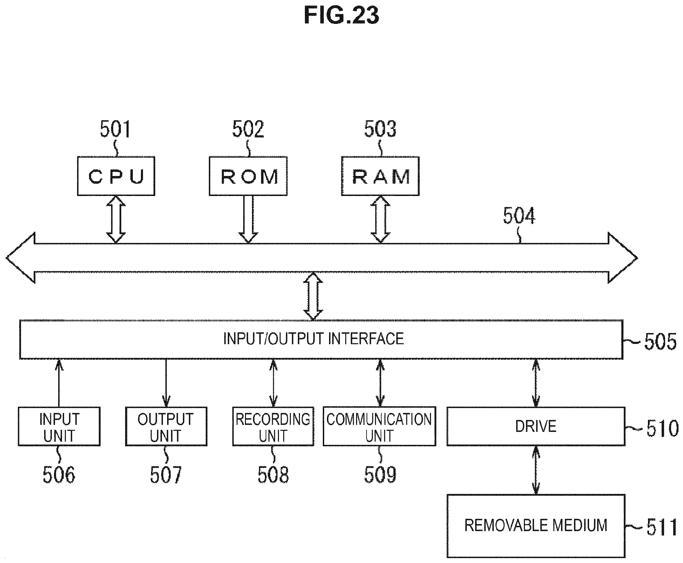

FIG. 23 is a block diagram that shows an example configuration of the hardware of a computer that executes the series of processes described earlier according to a program.

In a computer, a CPU (Central Processing Unit) 501, a ROM (Read Only Memory) 502, and a RAM (Random Access Memory) 503 are mutually connected by a bus 504.

An input/output interface 505 is also connected to the bus 504. An input unit 506, an output unit 507, a recording unit 508, a communication unit 509, and a drive 510 are connected to the input/output interface 505.

The input unit 506 is configured from a keyboard, a mouse, a microphone, an imaging element or the like. The output unit 507 configured from a display, a speaker or the like. The recording unit 508 is configured from a hard disk, a nonvolatile memory or the like. The communication unit 509 is configured from a network interface or the like. The drive 510 drives a removable medium 511 such as a magnetic disk, an optical disk, a magneto-optical disk, a semiconductor memory or the like.

In the computer configured as described above, as one example the CPU 501 loads a program stored in the recording unit 508 via the input/output interface 505 and the bus 504 into the RAM 503 and executes the program to carry out the series of processes described earlier.

As one example, the program executed by the computer (the CPU 501) may be provided by being recorded on the removable medium 511 as a packaged medium or the like. The program can also be provided via a wired or wireless transfer medium, such as a local area network, the Internet, or a digital satellite broadcast.

In the computer, by loading the removable medium 511 into the drive 510, the program can be installed into the recording unit 508 via the input/output interface 505. It is also possible to receive the program from a wired or wireless transfer medium using the communication unit 509 and install the program into the recording unit 508. As another alternative, the program can be installed in advance into the ROM 502 or the recording unit 508.

Note that the program executed by the computer may be a program in which processes are carried out in a time series in the order described in this specification or may be a program in which processes are carried out in parallel or at necessary timing, such as when the processes are called.

An embodiment of the present technology is not limited to the embodiments described above, and various changes and modifications may be made without departing from the scope of the appended claims.

For example, the present technology can adopt a configuration of cloud computing which processes by allocating and connecting one function by a plurality of apparatuses through a network.

Further, each step described by the above-mentioned flow charts can be executed by one apparatus or by allocating a plurality of apparatuses.

In addition, in the case where a plurality of processes are included in one step, the plurality of processes included in this one step can be executed by one apparatus or by sharing a plurality of apparatuses.

The effects described in this specification are merely examples only limited by the scope of the appended claims.

### Reference Signs List

- 11: imaging apparatus
- 53: user interface
- 67: focal region decision processing unit
- 68: memory
- 69: display processing unit
- 70: display control processing unit
- 71: focus lens control processing unit
- 121: multifunctional mobile phone device
- 201: wearable camera

## Claims

1. An image processing apparatus, comprising:
a focal region decision processing unit (67) configured to calculate a focal score showing a focal degree of each region of a photographic image based on the photographic image;
a display control processing unit (70) configured to select a plurality of regions where the focal score is a prescribed value or more, as display center positions, based on the focal score for each of the regions of the photographic image, where each of the plurality of regions is specified by the coordinates (Xp, Yp) of a point contained in each of the regions; and
a display processing unit (69) configured to generate an enlarged display image for each of the plurality of selected regions, wherein each enlarged display image is generated by cutting out a region of a predetermined size centered on the corresponding display center position from the photographic image,
wherein the display processing unit generates the enlarged display images centered on the corresponding display center position and wherein the plurality of enlarged display images are successively displayed in an order from the highest focal score.

2. The image processing apparatus according to claim 1,
wherein the display control processing unit detects a display center position from within a decision target region (FD) including a region (FR) set to a focus target in an automatic focus at the time of photography of the photographic image, based on the focal score of each region within the decision target region.

3. The image processing apparatus according to claim 2,
wherein the focal region decision processing unit performs a calculation of the focal score by setting to a target of calculation only the decision target region within the photographic image.

4. The image processing apparatus according to any one of claims 1 to 3, further comprising:
a display unit (26) configured to display the enlarged display image.

5. The image processing apparatus according to any one of claims 1 to 4,
wherein the display control processing unit sets a region with the highest focal score to the display center position.

6. An image processing method, comprising the steps of:
calculating a focal score showing a focal degree of each region of a photographic image based on the photographic image;
selecting, from each of the regions of the photographic image, a plurality of regions where the focal score is a prescribed value or more, as display center positions, based on the focal score, where each of the plurality of regions is specified by the coordinates (Xp, Yp) of a point contained in each of the regions; and
generating an enlarged display image for each of the plurality of selected regions, where each display image is generated by cutting out a region of a predetermined size centered on the corresponding display center position from the photographic image, wherein the plurality of enlarged display images are successively displayed centered on the corresponding display center position in an order from the highest focal score.

7. A program for causing a computer to execute a process including the steps of:
calculating a focal score showing a focal degree of each region of a photographic image based on the photographic image;
selecting, from each of the regions of the photographic image, a plurality of regions where the focal score is a prescribed value or more, as display center positions, based on the focal score, where each of the plurality of regions is specified by the coordinates (Xp, Yp) of a point contained in each of the regions; and
generating an enlarged display image for each of the plurality of selected regions, where each display image is generated by cutting out a region of a predetermined size centered on the corresponding display center position from the photographic image, wherein the plurality of enlarged display images are successively displayed centered on the corresponding display center position in an order from the highest focal score.

## Patentansprüche

1. Bildverarbeitungsvorrichtung, umfassend:
eine Fokusbereichsentscheidungs-Verarbeitungseinheit (67), die dazu ausgelegt ist, eine Fokussierungsbewertung, die einen Fokussierungsgrad jedes Bereichs eines fotografischen Bildes zeigt, basierend auf dem fotografischen Bild zu berechnen;
eine Anzeigesteuerungsverarbeitungseinheit (70), die dazu ausgelegt ist, mehrere Bereiche, in denen die Fokussierungsbewertung ein vorgegebener Wert oder mehr ist, als Anzeigemittenpositionen basierend auf der Fokussierungsbewertung für jeden der Bereiche des fotografischen Bildes auszuwählen, wobei jeder der mehreren Bereiche durch die Koordinaten (Xp, Yp) eines Punktes, der in jedem der Bereich enthalten ist, spezifiziert wird; und
eine Anzeigeverarbeitungseinheit (69), die dazu ausgelegt ist, ein vergrößertes Anzeigebild für jeden der mehreren ausgewählten Bereiche zu erzeugen, wobei jedes vergrößerte Anzeigebild durch Ausschneiden eines Bereichs einer vorbestimmten Größe, der an der entsprechenden Anzeigemittenposition zentriert ist, aus dem fotografischen Bild erzeugt wird,
wobei die Anzeigeverarbeitungseinheit die vergrößerten Anzeigebilder erzeugt, die an der entsprechenden Anzeigemittenposition zentriert sind, und wobei die mehreren vergrößerten Anzeigebilder in einer Reihenfolge von der höchsten Fokussierungsbewertung sukzessive angezeigt werden.

2. Bildverarbeitungsvorrichtung nach Anspruch 1, wobei die Anzeigesteuerungsverarbeitungseinheit eine Anzeigemittenposition aus einem Entscheidungszielbereich (FD) einschließlich eines Bereichs (FR), der zu der Zeit der Aufnahme des fotografischen Bildes in einem automatischen Fokus zu einem Fokusziel gesetzt ist, basierend auf der Fokussierungsbewertung jedes Bereichs im Entscheidungszielbereich detektiert.

3. Bildverarbeitungsvorrichtung nach Anspruch 2, wobei die Fokusbereichsentscheidungs-Verarbeitungseinheit eine Berechnung der Fokussierungsbewertung durchführt, indem nur der Entscheidungszielbereich im fotografischen Bild zu einem Ziel der Berechnung gesetzt wird.

4. Bildverarbeitungsvorrichtung nach einem der Ansprüche 1 bis 3, ferner umfassend:
eine Anzeigeeinheit (26), die dazu ausgelegt ist, das vergrößerte Anzeigebild anzuzeigen.

5. Bildverarbeitungsvorrichtung nach einem der Ansprüche 1 bis 4,
wobei die Anzeigesteuerungsverarbeitungseinheit einen Bereich mit der höchsten Fokussierungsbewertung zu der Anzeigemittenposition setzt.

6. Bildverarbeitungsverfahren, das die folgenden Schritte umfasst:
Berechnen einer Fokussierungsbewertung, die einen Fokussierungsgrad jedes Bereichs eines fotografischen Bildes zeigt, basierend auf dem fotografischen Bild;
Auswählen, aus jedem der Bereiche des fotografischen Bildes, mehrerer Bereiche, in denen die Fokussierungsbewertung ein vorgegebener Wert oder mehr ist, als Anzeigemittenpositionen basierend auf der Fokussierungsbewertung, wobei jeder der mehreren Bereiche durch die Koordinaten (Xp, Yp) eines Punktes, der in jedem der Bereich enthalten ist, spezifiziert wird; und
Erzeugen eines vergrößerten Anzeigebildes für jeden der mehreren ausgewählten Bereiche,
wobei jedes Anzeigebild durch Ausschneiden eines Bereichs einer vorbestimmten Größe, der an der entsprechenden Anzeigemittenposition zentriert ist, aus dem fotografischen Bild erzeugt wird,
wobei die mehreren vergrößerten Anzeigebilder bei einer Benutzerbetätigung zentriert an der entsprechenden Anzeigemittenposition in einer Reihenfolge von der höchsten Fokussierungsbewertung sukzessive angezeigt werden.

7. Programm zum Bewirken, dass ein Computer einen Prozess ausführt, der die folgenden Schritte beinhaltet:
Berechnen einer Fokussierungsbewertung, die einen Fokussierungsgrad jedes Bereichs eines fotografischen Bildes zeigt, basierend auf dem fotografischen Bild;
Auswählen, aus jedem der Bereiche des fotografischen Bildes, mehrerer Bereiche, in denen die Fokussierungsbewertung ein vorgegebener Wert oder mehr ist, als Anzeigemittenpositionen basierend auf der Fokussierungsbewertung, wobei jeder der mehreren Bereiche durch die Koordinaten (Xp, Yp) eines Punktes, der in jedem der Bereich enthalten ist, spezifiziert wird; und
Erzeugen eines vergrößerten Anzeigebildes für jeden der mehreren ausgewählten Bereiche,
wobei jedes Anzeigebild durch Ausschneiden eines Bereichs einer vorbestimmten Größe, der an der entsprechenden Anzeigemittenposition zentriert ist, aus dem fotografischen Bild erzeugt wird,
wobei die mehreren vergrößerten Anzeigebilder bei einer Benutzerbetätigung zentriert an der entsprechenden Anzeigemittenposition in einer Reihenfolge von der höchsten Fokussierungsbewertung sukzessive angezeigt werden.

## Revendications

1. Appareil de traitement d'image comprenant :
une unité de traitement de décision de région focale (67) configurée pour calculer un score focal représentant un degré focal de chaque région d'une image photographique en se basant sur l'image photographique ;
une unité de traitement de commande d'affichage (70) configurée pour sélectionner une pluralité de régions où le score focal est égal ou supérieur à une valeur prescrite, en tant que positions de centre d'affichage, en se basant sur le score focal pour chacune des régions de l'image photographique,
où chaque région de la pluralité de régions est spécifiée par les coordonnées (Xp, Yp) d'un point contenu dans chacune des régions ; et
une unité de traitement d'affichage (69) configurée pour générer une image d'affichage agrandie pour chaque région sélectionnée de la pluralité de régions sélectionnées, dans lequel chaque image d'affichage agrandie est générée en découpant une région d'une taille prédéterminée centrée sur la position de centre d'affichage correspondante à partir de l'image photographique,
dans lequel l'unité de traitement d'affichage génère les images d'affichage agrandies centrées sur la position de centre d'affichage correspondante et dans lequel la pluralité d'images d'affichage agrandies sont affichées successivement dans un certain ordre à partir du score focal le plus élevé.

2. Appareil de traitement d'image selon la revendication 1,
dans lequel l'unité de traitement de commande d'affichage détecte une position de centre d'affichage à de l'intérieur d'une région cible de décision (FD) comprenant une région (FR) réglée à une cible de mise au point lors d'une mise au point automatique au moment d'une photographie de l'image photographique, en se basant sur le score focal de chaque région à l'intérieur de la région cible de décision.

3. Appareil de traitement d'image selon la revendication 2,
dans lequel l'unité de traitement de décision de région focale effectue un calcul du score focal en réglant à une cible dudit calcul seulement la région cible de décision à l'intérieur de l'image photographique.

4. Appareil de traitement d'image selon l'une quelconque des revendications 1 à 3, comprenant en outre :
une unité d'affichage (26) configurée pour afficher l'image d'affichage agrandie.

5. Appareil de traitement d'image selon l'une quelconque des revendications 1 à 4,
dans lequel l'unité de traitement de commande d'affichage règle une région ayant le score focal le plus élevé à la position de centre d'affichage.

6. Procédé de traitement d'image comprenant les étapes consistant :
à calculer un score focal représentant un degré focal de chaque région d'une image photographique en se basant sur l'image photographique ;
à sélectionner, parmi chacune des régions de l'image photographique, une pluralité de régions où le score focal est égal ou supérieur à une valeur prescrite, en tant que positions de centre d'affichage, en se basant sur le score focal, où chaque région de la pluralité de régions est spécifiée par les coordonnées (Xp, Yp) d'un point contenu dans chacune des régions ; et
à générer une image d'affichage agrandie pour chaque région sélectionnée de la pluralité de régions sélectionnées, où chaque image d'affichage est générée en découpant une région d'une taille prédéterminée centrée sur la position de centre d'affichage correspondante à partir de l'image photographique,
dans lequel la pluralité d'images d'affichage agrandies sont affichées successivement en étant centrées sur la position de centre d'affichage correspondante dans un certain ordre à partir du score focal le plus élevé lors d'une opération de l'utilisateur.

7. Programme pour amener un ordinateur à exécuter un processus comprenant les étapes consistant :
à calculer un score focal représentant un degré focal de chaque région d'une image photographique en se basant sur l'image photographique ;
à sélectionner, parmi chacune des régions de l'image photographique, une pluralité de régions où le score focal est égal ou supérieur à une valeur prescrite, en tant que positions de centre d'affichage, en se basant sur le score focal, où chaque région de la pluralité de régions est spécifiée par les coordonnées (Xp, Yp) d'un point contenu dans chacune des régions ; et
à générer une image d'affichage agrandie pour chaque région sélectionnée de la pluralité de régions sélectionnées, où chaque image d'affichage est générée en découpant une région d'une taille prédéterminée centrée sur la position de centre d'affichage correspondante à partir de l'image photographique,
dans lequel la pluralité d'images d'affichage agrandies sont affichées successivement en étant centrées sur la position de centre d'affichage correspondante dans un certain ordre à partir du score focal le plus élevé lors d'une opération de l'utilisateur.
